# EUROPÄISCHE PATENTSCHRIFT

(11) **EP 0 483 588 B1**
(45) Veröffentlichungstag und Bekanntmachung des Hinweises auf die Patenterteilung: **18.05.1994**
(21) Anmeldenummer: 91117541.2
(22) Anmeldetag: 14.10.1991
(51) Int. Cl.: A47J 27/17

(54) **Dampfbeheizter Kochkessel**
Steam-heated cooking vessel
Récipient de cuisson chauffé à la vapeur

(30) Priorität: 27.10.1990 DE 4034215
(43) Veröffentlichungstag der Anmeldung: 06.05.1992
(73) Patentinhaber: JUNO GROSSKÜCHEN GmbH, D-35723 Herborn (DE)
(72) Erfinder: Müller, Herbert, W-6348 Herborn 3 (DE)
(74) Vertreter: Herrmann-Trentepohl, Werner, Dipl.-Ing.

(56) Entgegenhaltungen:
- CH-A- 422 183
- DE-A- 2 816 162
- DE-A- 3 010 475

## Beschreibung

Die Erfindung betrifft einen dampfbeheizten Kochkessel mit einem Doppelmantel für ein beheizbares Wasserbad und einem den Speisenbehälter umgebenden Dampfraum.

Um den Wärmeübergang vom Dampfraum auf den Speisenbehälter optimal einzustellen, ist es notwendig dafür zu sorgen, daß der Wasserdampf nicht mit Luft vermischt ist. Der Wärmeübergang von heißer Luft bei freier Konvektion beträgt nur einen Bruchteil dessen von kondensierendem Wasserdampf. Beim Betrieb von dampfbeheizten Kochkesseln wird deshalb vor jedem neuen Kochvorgang die Dampfkammer entlüftet. In der DE-OS 28 16 162 wird ein solcher dampfbeheizter Kochkessel beschrieben, dessen Dampfkammer in Form eines die Kochkammer bildenden Doppelmantels ausgebildet ist. Am oberen Ende der Dampfkammer ist ein temperaturgesteuertes Ventil zum Ent- und Belüften des Dampfraumes vorgesehen. Beim Auftreten von im wesentlichen reinen Dampf beim Aufheizen des Kochkessels, d.h. sobald der Doppelmantel (Dampfraum) entlüftet ist, schließt das Ventil. Dies bedeutet jedoch, daß bei jedem Start des Kochkessels eine bestimmte Dampfmenge entweicht, bevor das Ventil schließt. Von Zeit zu Zeit muß Wasser in die Wasserkammer nachgefüllt werden, um den Wasserverlust zu ersetzen. Das verwendete Wasser sollte außerdem entkalkt sein. Um diesen Wartungsaufwand möglichst gering zu halten, soll gemäß der DE-OS 28 16 162 die Auslaßseite des Ventils mit einem Dampfkondensator verbunden sein, um eine Kondensation des die Dampfkammer während des anfänglichen Aufkochens des Wassers verlassenden Dampfes zu erreichen. Dabei ist der Kondensator mit dem Ventil so verbunden, daß das Kondensat durch den Sog, der durch das Abkühlen der Dampfkammer nach Beendigung des Kochens erzeugt wird, in die Dampfkammer zurückgesaugt wird.
Die Anordnung des Ventils am oberen Ende der Dampfkammer hat sich als nachteilig herausgestellt, weil für die vollständige Entlüftung eine verhältnismäßig lange Zeit erforderlich ist, und außerdem nicht gewährleistet ist, daß die Luft vollständig entweicht, bevor die Temperatur zur Schließung des Ventils erreicht ist. Die hierdurch bedingt lange Ankochzeit soll durch die Erfindung verkürzt werden.

Der Erfindung liegt die Erkenntnis zugrunde, daß erwärmte Luft spezifisch schwerer ist als Wasserdampf von gleicher Temperatur.

Zur Lösung des Problemes der zu langen Ankochzeit wird unter Ausnutzung der Dichteunterschiede von Luft und Wasserdampf das im Patentanspruch 1 angegebene Merkmal der Anordnung des Ventils möglichst oberhalb des Wasserbad-Niveaus vorgeschlagen.
Die beim Anheizen des Wasserbades entstehenden Dampfblasen schieben die sich erwärmende Luft auf kürzestem Weg über das Ventil aus dem Dampfraum hinaus.
In der Zeichnung ist ein Ausführungsbeispiel mit weiteren Merkmalen der Erfindung dargestellt.
Es zeigen:
- Fig. 1: den Aufbau eines Kochkessels im Schnitt
- Fig. 2 und 3: andere Anschlußmöglichkeiten von Ventil und Kondensator
- Fig. 4: ein zum Entlüften und Belüften des Dampfraumes geeignetes Ventil.

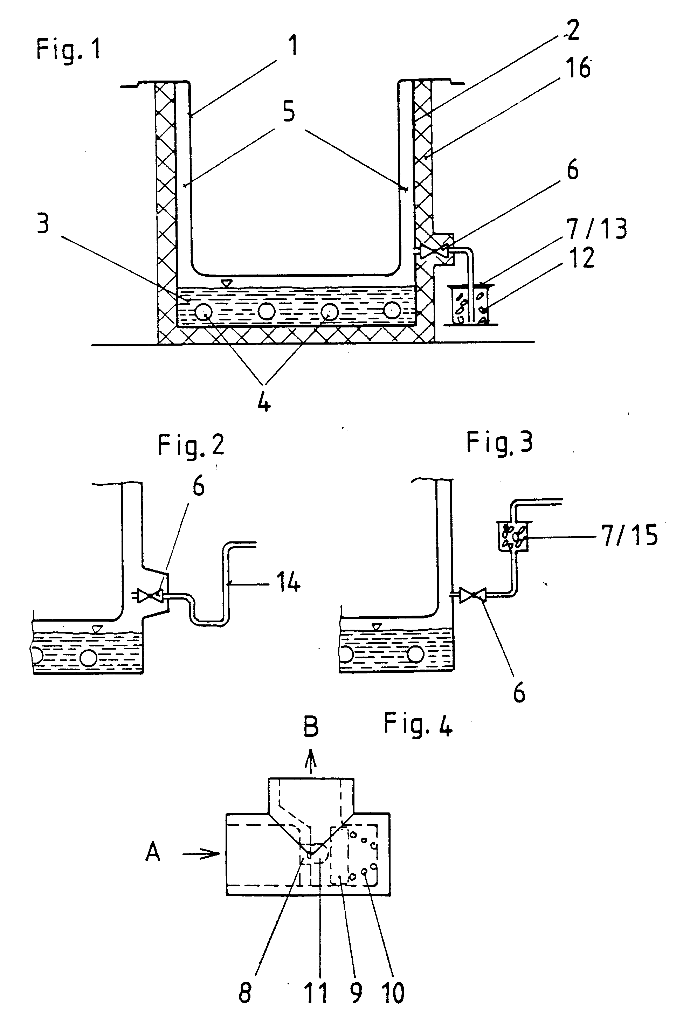

In Fig. 1 ist ein Kochkessel schematisch als Ganzes dargestellt. Er besteht im wesentlichen aus dem die Speisen aufnehmenden Kochbehälter 1, welcher mit Abstand zur Bildung eines Doppelmantels von einem Außenmantel 2 umgeben ist. Der Innenraum des Doppelmantels enthält das Wasserbad 3 mit den Heizelementen 4 und dem sich über dem Wasserbad 3 befindlichen Dampfraum 5, welcher den Kochbehälter 1 umgibt. An den Dampfraum 5 ist möglichst dicht oberhalb des Wasserbades 3 das Ventil 6 angeschlossen, welches in Fig. 4 dargestellt ist. Die Austrittsöffnung des Ventils 6 ist mit einem Kondensator 7 verbunden. Die Funktion des Ventils 6 einschließlich des Kondensators 7 beim Betreiben des Kochkessels ist folgendermaßen:

Beim kalten Kochkessel ist das Ventil 6 geöffnet. Die Heizelemente 4 werden eingeschaltet und das Wasserbad 3 wird so weit erhitzt, daß Wasserdampf entsteht, welcher in den Dampfraum 5 hochsteigt. Der entstehende Wasserdampf verdrängt die im Doppelmantel vorhandene Luft durch das Ventil 6. Weil die Luft schwerer als der Wasserdampf ist und das Ventil 6 im unteren Bereich des Dampfraumes 5 angeschlossen ist, wird folgendes erreicht: Die im Doppelmantel befindliche Luft wird möglichst schnell verdrängt und Wasserdampf kann erst dann entweichen, wenn die Luft vollständig verdrängt worden ist. Das Ventil 6 besitzt einen Wärmefühler 9, welcher bei einer bestimmten Temperatur unter dem barometrischen Siedepunkt das Schließen des Ventiles 6 bewirkt. Dadurch wird der Dampfraum von einem bis dahin offenen in ein geschlossenes System übergeführt. Durch die Isolierung 16 des Ventiles 6 wird begünstigt, daß einerseits die Schließtemperatur sehr schnell errreicht wird, andererseits aber dar Kessel lange im Zustand eines geschlossenen Systems bleibt, sodaß in der Regel die Bildung von Unterdruck im Dampfraum beim Abkühlen des Kessels erreicht wird.

Durch die Anordnung des Wärmefühlers 9 auf der dem barometrischen Luftdruck ausgesetzten Seite des Ventiles 6 wird die möglicherweise entweichende Wasserdampfmenge auf ein Minimum reduziert, evtl. entweichender Dampf aber im Kondensator niedergeschlagen und bei sich einstellendem Unterdruck -wie oben beschrieben- wieder dem Wasserbad zugeführt.

In Fig. 4 ist ein Ausführungsbeispiel für den Aufbau und die Anordnung eines Ventiles 6 gezeigt. Entgegen dem üblichen Anschluß derartiger Ventile, wird in diesem Falle das Ventil über A an den Dampfraum angeschlossen. Das aus dem Dampfraum entweichende Medium strömt durch die Ventilöffnung 8, dann über den Wärmefühler 9 mit der Verschlußkugel 11 und der feder 10 zum Ausgang B und von dort zum Kondensator.

Der Kondensator kann auf verschiedene Weise gestaltet und angeschlossen sein. In Fig. 1 ist ein mit Blechstücken 12 gefülltes Gefäß 13 angedeutet, in welches der entweichende Wasserdampf von oben eingeführt wird. Fig. 2 zeigt ein einfaches syphonartig angeordnetes Rohrstück 14 und Fig. 3 deutet einen Kondensationsbehälter 15 an, welcher höher als das Ventil 6 liegt.

Nach Beendigung eines Kochvorganges kühlt der Dampfkessel ab, der im Dampfraum 5 vorhandene Wasserdampf kondensiert, wodurch im Doppelmantel ein Unterdruck entstehen kann. Der Wärmefühler 9 des Ventils kühlt sich ebenfalls ab und das Ventil öffnet. Durch den Unterdruck im Doppelmantel wird beim öffnen des Ventils zunächst das sich im Kondensator gebildete Kondensat zurück in den Doppelmantel gesaugt und dann der Doppelmantel belüftet.
Um einerseits die Schließstellung des Ventils 6 möglichst schnell zu erreichen und andererseits nach Ende eines Kochprozesses auch möglichst lange geschlossen zu halten, wird das Ventil dichtmöglichst am Dampfraum montiert und wie Fig. 1 zeigt auch die in die Geräteisolation 16 einbezogen. Die beste wärmeleitende Ankopplung des Ventils 6 wäre die Anordnung im Dampfraum selbst (Fig. 2). Weil nicht in jedem Falle gewährleistet ist, daß der Unterdruck im Doppelmantel das Kondensat wieder zurücksaugen kann, ist in Fig. 3 eine Anordnung gezeigt, bei welcher das Kondensat durch Schwerkraft in den Kochkessel zurückfließen kann. Der Kondensatbehälter ist hochgelegt. Das sich im Syphon-Rohr 14 gemäß Fig. 2 sammelnde Kondensat läuft bei genügender Kondensatmenge ebenfalls zunächst aufgrund der höher als die Anschlußstelle stehenden Wassersäule in den Dampfraum zurück und wird nach dem Weinheberprinzip dann vollständig entleert.

Es hat sich gezeigt, daß durch die erfindungsgemäße Anordnung des Ventils und des Kondensators ein äußerst schneller Ankochvorgang erreicht wird und praktisch kein Wasser nachgefüllt werden muß, sondern eine Kontrolle des Wasserstandes im Rahmen einer üblichen Kesselinspektion genügt.

## Patentansprüche

1. Dampfbeheizter Kochkessel mit einem Doppelmantel für ein beheizbares Wasserbad und einem den Speisenbehälter umgebenden Dampfraum (5), sowie einem an den Dampfraum angeschlossenen temperaturgesteuerten Ventil (6) zum Ent- bzw. Belüften, dessen Auslaßseite mit einem Dampfkondensator (7) so verbunden ist, daß das Kondensat beim Abkühlen des Dampfraumes in den Doppelmantel zurückgeführt wird, dadurch gekennzeichnet, daß das temperaturgesteuerte Ventil (6) zum Ent- und Belüften des Dampfraumes möglichst nahe oberhalb des Wasserbad-Niveaus an den Doppelmantel angeschlossen ist.

2. Dampfbeheizter Kochkessel nach Anspruch 1, dadurch gekennzeichnet,
daß das Ventil (6) im unteren Drittel des über dem Wasserbad (3) sich befindenden Dampfraumes (5) angeschlossen ist.

3. Dampfbeheizter Kochkessel nach Anspruch 1 und/ oder 2 dadurch gekennzeichnet,
daß das Ventil (6) möglichst dicht am Dampfraum (5) angeordnet ist.

4. Dampfbeheizter Kochkessel nach Anspruch 3 dadurch gekennzeichnet,
daß das Ventil (6) wärmeisoliert ist.

5. Dampfbeheizter Kochkessel nach Anspruch 3, dadurch gekennzeichnet,
daß das Gehäuse des Ventils (6) im Dampfraum (5) angeordnet ist.

6. Dampfbeheizter Kochkessel nach Anspruch 1 und/oder einem der Ansprüche 2 bis 5, dadurch gekennzeichnet,
daß der Wärmefühler des Ventils (6) auf der dem barometrischen Luftdruck ausgesetzten Seite des Verschlußorganes angeordnet ist.

7. Dampfbeheizter Kochkessel nach Anspruch 6, dadurch gekennzeichnet,
daß der Wärmefühler des Ventiles (6) aus einer mit einer Verdampfungsflüssigkeit gefüllten Ausdehnungskapsel besteht.

8. Dampfbeheizter Kochkessel nach einem der Ansprüche 1 bis 7, dadurch gekennzeichnet,
daß der Wärmefühler des Ventiles (6) ein vom Umgebungsdruck unbeeinflußbares Ausdehnungselement ist.

9. Dampfbeheizter Kochkessel nach einem oder mehreren der Ansprüche 1 bis 8, dadurch gekennzeichnet,
daß die Austrittsöffnung des Ventiles (6) zu einem Kondensationsbehälter (7) führt, welcher mit Metallstückchen (12) gefüllt ist.

10. Dampfbeheizter Kochkessel nach Anspruch 1 und/ oder einem der Ansprüche 2 bis 8, dadurch gekennzeichnet,
daß als Kondensator ein Rohrbogen (14) dient, dessen Auslauföffnung höher liegt als die Anschlußstelle des Ventils (6) an den Dampfraum.

11. Dampfbeheizter Kochkessel anch einem oder mehreren der Ansprüche 1 bis 10, dadurch gekennzeichnet,
daß der Rohrbogen nach oben in einen Kondensationsbehälter führt.

## Claims

1. Steam-heated cooking vessel having a double casing for a heatable water bath and a steam chamber (5) surrounding the food container, as well as a temperature-controlled valve (6) which is connected to the steam chamber for ventilation, the outlet side of which valve is connected to a steam condensor (7) in such a way that the condensate is guided back into the double casing as the steam chamber cools, characterised in that the temperature-controlled valve (6) for ventilating the steam chamber is connected to the double casing as close as possible above the water bath level.

2. Steam-heated cooking vessel according to Claim 1, characterised in that the valve (6) is connected in the lower third of the steam chamber (5) located above the water bath (3).

3. Steam-heated cooking vessel according to Claim 1 and/or Claim 2, characterised in that the valve (6) is disposed as closely as possible to the steam chamber (5).

4. Steam-heated cooking vessel according to Claim 3, characterised in that the valve (6) is heat-insulated.

5. Steam-heated cooking vessel according to Claim 3, characterised in that the housing of the valve (6) is disposed in the steam chamber (5).

6. Steam-heated cooking vessel according to Claim 1 and/or any one of Claims 2 to 5, characterised in that the heat sensor of the valve (6) is disposed on the side of the closure member exposed to barometric air pressure.

7. Steam-heated cooking vessel according to Claim 6, characterised in that the heat sensor of the valve (6) consists of an expansion capsule filled with an evaporation fluid.

8. Steam-heated cooking vessel according to any one of Claims 1 to 7, characterised in that the heat sensor of the valve (6) is an expansion component which cannot be influenced by ambient pressure.

9. Steam-heated cooking vessel according to one or more of Claims 1 to 8, characterised in that the outlet opening of the valve (6) leads to a condensation container (7) which is filled with metal particles (12).

10. Steam-heated cooking vessel according to Claim 1 and/or any one of Claims 2 to 8, characterised in that a curved tube (14), of which the outlet opening is higher than the point at which the valve (6) is connected to the steam chamber, acts as a condensor.

11. Steam-heated cooking vessel according to one or more of Claims 1 to 10, characterised in that the curved tube leads upwards into a condensation container.

## Revendications

1. Marmite de cuisson chauffée à la vapeur comportant une double enveloppe pour un bain-marie susceptible d'être chauffé et un espace à vapeur (5) entourant le récipient d'aliments, ainsi qu'une soupape thermostatique (6) pour aérer, respectivement désaérer, raccordée à l'espace à vapeur, dont le côté d'échappement est relié à un condenseur de vapeur (7) de telle manière que, lors du refroidissement de l'espace à vapeur, le condensat soit renvoyé dans la double enveloppe, caractérisée en ce que la soupape thermostatique ( 6) pour aérer, respectivement désaérer l'espace à vapeur est raccordée à la double enveloppe aussi près que possible au-dessus du niveau du bain-marie.

2. Marmite de cuisson chauffée à la vapeur selon la revendication 1, caractérisée en ce que la soupape (6) est raccordée dans le tiers inférieur de l'espace à vapeur (5) se trouvant au-dessus du bain-marie (3).

3. Marmite de cuisson chauffée à la vapeur selon la revendication 1 et/ou 2, caractérisée en ce que la soupape (6) est disposée le plus près possible de l'espace vapeur (5).

4. Marmite de cuisson chauffée à la vapeur selon la revendication 3, caractérisée en ce que la soupape (6) est calorifugée.

5. Marmite de cuisson chauffée à la vapeur selon la revendication 3, caractérisée en ce que le boîtier de la soupape (6) est disposé dans l'espace vapeur (5).

6. Marmite de cuisson chauffée à la vapeur selon la revendication 1 et/ou l'une quelconque des revendications 2 à 5, caractérisée en ce que le détecteur de chaleur de la soupape (6) est disposé sur le côté exposé à la pression barométrique d'air de l'organe de fermeture.

7. Marmite de cuisson chauffée à la vapeur selon la revendication 6, caractérisée en ce que le détecteur de chaleur de la soupape (6) est constitué d'une capsule d'expansion remplie d'un liquide d'évaporation.

8. Marmite de cuisson chauffée à la vapeur selon l'une quelconque des revendications 1 à 7, caractérisée en ce que le détecteur de chaleur de la soupape (6) est un élément d'expansion ne pouvant pas être influencé par la pression ambiante.

9. Marmite de cuisson chauffée à la vapeur selon l'une quelconque ou plusieurs des revendications 1 à 8, caractérisée en ce que l'orifice de sortie de la soupape (6) conduit vers un bac de condensation (7) qui est rempli de particules métalliques (12).

10. Marmite de cuisson chauffée à la vapeur selon la revendication 1 et/ou l'une des revendications 2 à 8 , caractérisée en ce qu'une lyre (14) dont l'orifice de sortie est situé à un niveau supérieur au point de raccordement de la soupape (6) de l'espace à vapeur, fait office de condenseur.

11. Marmite de cuisson chauffée à la vapeur selon l'une quelconque ou plusieurs des revendications 1 à 10, caractérisée en ce que la lyre conduit versle haut dans un bac de condensation.
